# EUROPEAN PATENT APPLICATION

(11) **EP 2 254 079 A1**
(43) Date of publication of application: **24.11.2010**
(21) Application number: 09008008.6
(22) Date of filing: 18.06.2009
(51) Int. Cl.: G06Q 10/00

(54) **Methods and systems for uploading media files to media hosts**

(30) Priority: 20.05.2009 US 469380
(71) Applicant: ACCENTURE Global Services GmbH, 8200 Schaffhausen (CH)
(72) Inventor: Socher, Larry M., Vienna VA 22180 (US); Censi, Alberto, Chicago IL 60657 (US)
(74) Representative: Müller-Boré & Partner Patentanwälte

(57) **Abstract**

Systems and methods consistent with the present invention allow a media file to be transmitted from one jurisdiction to multiple media hosting sites in another jurisdiction in accordance with a user's instructions. The media file may be transmitted over a long distance communications channel once, and then uploaded onto the multiple media hosting sites, rather than be sent across the long distance communications channel once for each media hosting site to which the user intents to upload the file. Additionally, the media file may be uploaded locally by the user, and then the user may rely on the systems and methods disclosed herein to transmit the media file across the long distance communications channel, rather than require the user to transmit the file over the long distance communications channel.

## Description

### Technical Field

Methods and systems are described which relate to uploading one or more media files from one jurisdiction to media hosts in another jurisdiction.

### Background

In recent years, there has been an explosion in the number and type of media hosting websites. One type of media hosting site includes social-networking sites such as Facebook ® (www.facebook.com), MySpace ® (www.myspace.com), Badoo ® (www.badoo.com), and Twitter ® (www.twitter.com), among many others. Another type of media hosting site includes purely content posting and/or sharing sites, for example YouTube ® (www.youtube.com), Shutterfly ® (www.shutterfly.com), and Photobucket ® (www.photobucket.com), among others. Numerous other types and categories of media hosting sites exist as well, addressing the particular tastes and other characteristics of internet users.

The boom in media hosting sites has not been limited to the internet. In addition to traditional media hosting websites that users may access via a personal computer, specialized applications have been developed for mobile communications devices, such as cellular telephones and personal digital assistants, that allow users to post and view media content using such devices.

Additionally, a growing number of devices are capable of creating media content to be posted to media hosts. From cellular telephones, to digital cameras, to portable voice recorders, to personal computers, and beyond - media content can be created almost anywhere with innumerable types of devices.

The rise in popularity of media hosting sites marks a significant shift in internet behavior. Prior to the proliferation of media hosting sites, most internet behavior involved downloading content from websites to users. Users, for example, would download the content of websites as they navigated the internet; download audio, video, or image files that they enjoyed and save them on their personal computer; or download programs to run on their personal computer. But with the growth in the number of media hosting sites, uploading content from users to websites and other networked locations has become a very important component of internet behavior as well. Users now frequently upload audio, video, image, program, and other types of files to media hosting sites to either share with the public or with a restricted group of people, or simply for personal use.

Traditional forms of internet connectivity, such as cable internet and digital subscriber line ("DSL") connections, reflect the older trends in internet usage and its emphasis on downloading rather than uploading. Typically, cable and DSL connections offered higher download speeds than upload speeds to users. Absent strong demand from users for uploading media content, and hence higher demand for higher upload speeds, the comparatively slower upload speeds were generally acceptable.

In recent years, optical fiber internet connectivity has been replacing copper cable connectivity. At first, fiber was only used in long distance internet connections. Gradually, fiber began to be installed ever closer to users' homes, for example to a user's neighborhood or curb, and the last stretch of the connection - to the user's home itself - would consist of traditional copper wire. Eventually, fiber began to be installed right into users' homes - also called "fiber to the home" ("FTTH"). One benefit of FTTH was the significant increase in upload speeds compared to cable internet and DSL.

Despite the increased upload speeds that FTTH has yielded, however, there are still significant problems relating to the uploading of media files to media hosts. Uploading large media files over long distances - for example between different jurisdictions - can be costly, burdensome on network bandwidth, and time-consuming for users.

For example, in Singapore, which has a large English-speaking population, there is a tremendous, and growing, demand for uploading media files to websites with servers located in the United States. In particular, Facebook ®, Linkedln ®, and Twitter ® are popular media hosts among internet users in Singapore, and they have servers located in the United States. In order to upload one media file - for example a large video file - to these three different media hosts, a user in Singapore would have to upload the video file to each website, one after the other. Thus, the same large video file would pass over the long distance internet connection between Singapore and the United States three times.

Each transfer of data is costly, utilizes a significant amount of bandwidth, and take a substantial amount of time. For example, transferring a 150 megabyte file from Singapore to a media host in the Untied States may take more than half an hour. The resulting "bottleneck" in transfers of media files is undesirable for both consumers and service providers, not to mention other internet users who share the finite bandwidth with the user. Similarly, if a user in Maine wanted to upload a media file to six different media hosts with servers in California and Washington, the user would have to undergo the same redundant, costly, burdensome, and time-consuming process. These problems will only become exacerbated in the future, as the quality, and hence file size, of media files continues to grow, the number and type of media hosting sites continues to increase, and the number of internet users around the world continues to multiply.

### SUMMARY

A method of transmitting electronic media from a user to a plurality of media hosts is disclosed, comprising receiving a media file from the user at a first server in a first jurisdiction over a first communications channel having a first bandwidth; receiving instructions from the user for providing the media file to a plurality of media hosts; transmitting the media file to a second server in a second jurisdiction over a second communications channel having a second bandwidth; and transmitting the media file from the second server to the plurality of media hosts over third communications channels having third bandwidths in accordance with the instructions; wherein the first bandwidth is less than the second and third bandwidths.

In other embodiments, a system for transmitting electronic media from a user to a plurality of media hosts is disclosed, comprising a first server in a first jurisdiction, which comprises a first component for receiving a media file from the user over a first communications channel having a first bandwidth, and a second component for receiving instructions from the user for providing the media file to a plurality of media hosts; and a second server in a second jurisdiction which comprises a third component for receiving the media file from the first server over a second communications channel having a second bandwidth, and a fourth component for transmitting the media file to the plurality of media hosts over third communications channels having third bandwidths in accordance with the instructions; wherein the first bandwidth is less than the second and third bandwidths.

According to an aspect, a method of transmitting electronic media from a user to a plurality of media hosts is provided. The method may comprise, receiving a media file from the user at a first server in a first jurisdiction over a first communications channel having a first bandwidth, and receiving instructions from the user for providing the media file to a plurality of media hosts. The method may further comprise, transmitting the media file to a second server in a second jurisdiction over a second communications channel having a second bandwidth, and transmitting the media file from the second server to the plurality of media hosts over third communications channels having third bandwidths in accordance with the instructions. It may be that the second bandwidth is greater than the first and third bandwidths.

Accordingly, it may be that the first server is located in a first country and the second server is located in a second country.

It may be that the user and the first server are located in the United States.

The first server may comprise a software interface capable of receiving a user selection of the media file and a user selection of the plurality of media hosts to which to transmit the media file. Accordingly, it may be that the method further comprises receiving authentication credentials for the user for the software interface and authentication credentials for the user for the plurality of media hosts. In addition, the method may comprise storing the authentication credentials for the user for the plurality of media hosts. The method may further comprise associating the authentication credentials for the user for the plurality of media hosts with a user account for the user for the software interface and the application programming interfaces of the plurality of media hosts. The method may comprise providing the authentication credentials for the user for the plurality of media hosts to the plurality of media hosts. The software interface may be presented to the user via a computer. Alternatively, the software interface may be presented to the user via a portable electronic communications device.

It may be that transmitting the media file from the second server to the plurality of media hosts comprises invoking at least one application programming interface associated with the plurality of media hosts.

It may be that the second communications channel is an internet backbone.

It may be that the first bandwidth and the second bandwidth differ by no more than 20 percent.

The method may further include providing a notification to the user when the media file has been transmitted to the plurality of media hosts.

In addition, there may be a third server in a third jurisdiction. In this case, transmitting the media file from the second server to the plurality of media hosts may comprise transmitting the media file from the second server to the third server over a fourth communications channel having a fourth bandwidth, and transmitting the media file from the third server to the plurality of media hosts in accordance with the user's instructions. The first jurisdiction, the second jurisdiction, and the third jurisdiction may be in different countries. Furthermore, the second bandwidth and the fourth bandwidth may differ by no more than 20 percent.

According to another aspect, a method of transmitting electronic media from a user to a plurality of media hosts is provided. The method may comprise receiving a media file from the user at a first server in a first jurisdiction having a first proximity to the user over a first communications channel. The method may also comprise receiving instructions from the user for providing the media file to a plurality of media hosts. In addition, the method may comprise transmitting the media file to a second server in a second jurisdiction having a second proximity to the user over a second communications channel, and transmitting the media file from the second server to the plurality of media hosts having third proximities to the user over third communications channels in accordance with the instructions. It may be that the first proximity to the user is substantially less than the second and third proximities to the user.

The first server may comprise a software interface for receiving user selections of the media file and of the plurality of media hosts to which to transmit the media file.

In this case, the method may comprise receiving authentication credentials for the user for the software interface and authentication credentials for the user for the plurality of media hosts. The method may further comprise storing the authentication credentials for the user for the plurality of media hosts, and associating the authentication credentials for the user for the plurality of media hosts with a user account for the user for the software interface and the application programming interfaces of the plurality of media hosts.

It may be that the first jurisdiction is in a different metropolitan region than the second jurisdiction.

According to yet another aspect, a method of transmitting electronic media from a user to a plurality of media hosts is provided. The method may comprise receiving a media file from the user at a first server in a first jurisdiction over a first communications channel having a first bandwidth. The method may also comprise receiving instructions from the user for providing the media file to a plurality of media hosts, and transmitting the media file to a second server in a second jurisdiction over a second communications channel having a second bandwidth for retransmission of the media file from the second server to the plurality of media hosts over third communications channels having third bandwidths in accordance with the instructions. It may be that the second bandwidth is greater than the first and third bandwidths.

Furthermore, transmitting the media file from the first server to the plurality of media hosts may comprise invoking at least one application programming interface associated with the plurality of media hosts.

Accordingly, the second communications channel may be an internet backbone.

Also, the method may include providing a notification to the user when the media file has been transmitted to the plurality of media hosts.

Furthermore, in accordance with an additional aspect, a method of transmitting electronic media from a user to a plurality of media hosts is provided. The method may comprise receiving a media file at a first server in a first jurisdiction from a second server in a second jurisdiction over a first communications channel having a first bandwidth. The method may also comprise receiving instructions from the user for providing the media file to a plurality of media hosts, and transmitting the media file from the first server to the plurality of media hosts over second communications channels having second bandwidths in accordance with the instructions. It may be that the first bandwidth is greater than the second bandwidths.

It may be that transmitting the media file from the first server to the plurality of media hosts may comprise invoking at least one application programming interface associated with the plurality of media hosts.

Furthermore, the first communications channel may be an internet backbone.

Moreover, the method may include providing a notification to the user when the media file has been transmitted to the plurality of media hosts.

In another aspect, a system for transmitting electronic media from a user to a plurality of media hosts is provided. The system may comprise a first server in a first jurisdiction, comprising a first component for receiving a media file from the user over a first communications channel having a first bandwidth, and a second component for receiving instructions from the user for providing the media file to a plurality of media hosts. The system may also include a second server in a second jurisdiction, comprising a third component for receiving the media file from the first server over a second communications channel having a second bandwidth, and a fourth component for transmitting the media file to the plurality of media hosts over third communications channels having third bandwidths in accordance with the instructions. It may be that the second bandwidth is greater than the first and third bandwidths.

According to a further aspect, a system for transmitting electronic media from a user to a plurality of media hosts is provided. The system may comprise a first server in a first jurisdiction, the first server comprising a first component for receiving a media file from the user over a first communications channel having a first bandwidth, and a second component for receiving instructions from the user for providing the media file to a plurality of media hosts. The first server may also comprise a third component for transmitting the media file to a second server in a second jurisdiction over a second communications channel having a second bandwidth for retransmission of the media file from the second server to the plurality of media hosts over third communications channels having third bandwidths in accordance with the instructions. It may be that the second bandwidth is greater than the first and third bandwidths.

In another aspect, a system for transmitting electronic media from a user to a plurality of media hosts is provided. The system may comprise a first server in a first jurisdiction, the first server comprising a first component for receiving a media file from a second server in a second jurisdiction over a first communications channel having a first bandwidth. The first server may also comprise a second component for receiving user-entered instructions for providing the media file to a plurality of media hosts, and a third component for transmitting the media file to the plurality of media hosts over second communications channels having second bandwidths in accordance with the instructions. It may be that the first bandwidth is greater than the second bandwidths.

According to yet another aspect, a system for transmitting electronic media from a user to a plurality of media hosts is provided. The system may comprise a first server in a first jurisdiction having a first proximity to the user, the first server comprising a first component for receiving a media file from the user over a first communications channel, the first server further comprising a second component for receiving instructions from the user for providing the media file to a plurality of media hosts. The system may also comprise a second server in a second jurisdiction having a second proximity to the user, the second server comprising a third component for receiving the media file over a second communications channel, the second server further comprising a fourth component for transmitting the media file to the plurality of media hosts having third proximities to the user over a third communications channel in accordance with the instructions. The first proximity to the user may be substantially less than the second and third proximities to the user.

According to a further aspect, a method of transmitting electronic media from a user to a plurality of media hosts is provided. The method may comprise receiving a media file from the user at a first server over a first communications channel, and receiving instructions from the user for providing the media file to a plurality of media hosts. The method may further comprise transmitting the media file to a second server over a second communications channel, and transmitting the media file from the second server to the plurality of media hosts over third communications channels in accordance with the instructions. It may be that, from the perspective of the first server, the first communications channel is a receiving communications channel and the second communications channel is a transmitting communications channel.

It may be that the first server comprises a software interface for receiving a user selection of the media file and of the plurality of media hosts to which to transmit the media file.

In some cases, the method comprises receiving authentication credentials for the user for the software interface and authentication credentials for the user for the plurality of media hosts, and storing the authentication credentials for the user for the plurality of media hosts. The method may also comprise associating the authentication credentials for the user for the plurality of media hosts with a user account for the user for the software interface and the application programming interfaces of the plurality of media hosts.

According to another aspect, a system for transmitting electronic media from a user to a plurality of media hosts is provided. The system may comprise a first server, comprising a first component for receiving a media file from the user over a first communications channel, and a second component for receiving instructions from the user for providing the media file to a plurality of media hosts. The system may also comprise a second server, comprising a third component for receiving the media file from the first server over a second communications channel, and a fourth component for transmitting the media file to the plurality of media hosts over third communications channels in accordance with the instructions. It may be that, from the perspective of the first server, the first communications channel is a receiving communications channel and the second communications channel is a transmitting communications channel. Various other embodiments are disclosed as well. It is to be understood that both the foregoing general description and the following detailed description are exemplary and explanatory only and are not restrictive of the invention, as claimed.

The accompanying drawings, which are incorporated in and constitute a part of this specification, illustrate exemplary embodiments of the invention and together with the description, serve to explain the principles of the invention.

### BRIEF DESCRIPTION OF THE DRAWINGS

Figure 1 is a flowchart depicting, in general terms, one exemplary embodiment of a process of uploading one or more media files from one jurisdiction to another jurisdiction.

Figure 2 is a depiction of one exemplary embodiment of a process of uploading one or more media files from one jurisdiction to another jurisdiction.

Figure 3 is a flowchart depicting, in general terms, one exemplary embodiment of a process of installing software to assist in the uploading of media files, and uploading one or more media files to a server in a first jurisdiction.

Figure 4 is a depiction of an exemplary user interface for allowing the user to identify one or more media files to be uploaded, and one or more media hosts to receive the media files.

Figure 5 is a depiction of an exemplary user interface for allowing the user to identify one or more music files to be uploaded, and one or more media hosts to receive the one or more music files.

Figure 6 is a depiction of an exemplary user interface for allowing the user to drag and drop one or more media files into fields associated with one or more media hosts.

Figure 7 is a depiction of an exemplary system and/or method for transmitting one or more media files from a first server in a first jurisdiction to a second server in a second jurisdiction.

Figure 8 is a depiction of an exemplary system and/or method for transmitting a media file from a second server to one or more media hosts.

Figure 9 is a depiction of an exemplary system and/or method for uploading a media file from one jurisdiction to a second jurisdiction by passing the media file through a third jurisdiction.

Figure 10 is a depiction of an exemplary first server and exemplary components that the first server may contain or be in communication with.

Figure 11 is a depiction of an exemplary second server and exemplary components that the second server may contain or be in communication with.

### DETAILED DESCRIPTION

Reference will now be made in detail to the exemplary embodiments, examples of which are illustrated in the accompanying drawings. Wherever convenient, the same reference numbers will be used throughout the drawings to refer to the same or like parts.

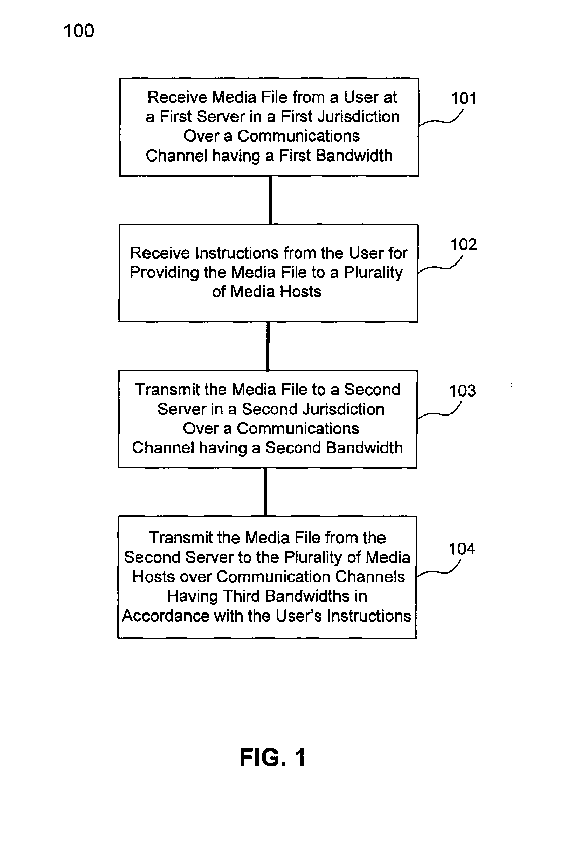

Figure 1 represents a flowchart depicting, in general terms, one exemplary embodiment of a process 100 of uploading one or more media files from one jurisdiction to another jurisdiction. In some embodiments, process 100 begins with a step 101 of receiving a media file from a user at a first server in a first jurisdiction over a communications channel having a first bandwidth. In addition, instructions from the user for providing the media file to a plurality of media hosts may be received in a step 102. Next, in a step 103, the media file may be transmitted to a second server in a second jurisdiction over a communications channel having a second bandwidth. Then, in a step 104, the media file may be transmitted from the second server to the plurality of media hosts over communications channels having third bandwidths in accordance with the user's instructions. Each of these exemplary steps of process 100 is discussed in more detail below.

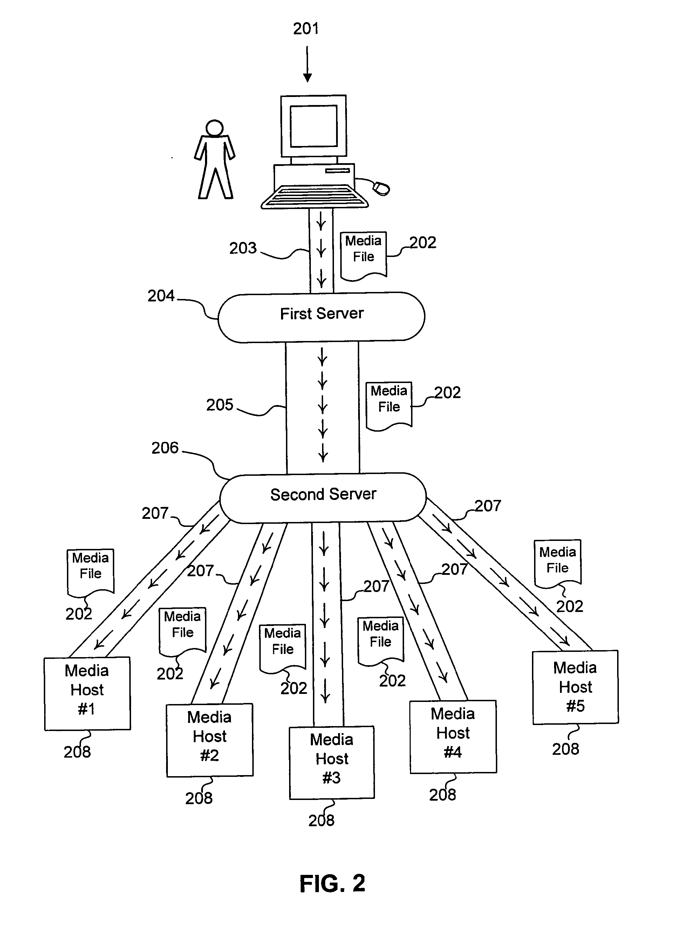

Figure 2 shows an exemplary approach to transmitting one or more media files from a user to a plurality of media hosts. As generally shown in Figure 2, user 201 may identify media file 202 for uploading to first server 204 over communications channel having a first bandwidth 203. Media file 202 may then be transmitted over communications channel having a second bandwidth 205 to second server 206. Once received by second server 206, media file 202 may be transmitted to plurality of media hosts 208 over communications channels 207. Each of these exemplary components depicted in Figure 2 is described in more detail below.

In some embodiments, process 100 of Figure 1 may begin with a step 101 of receiving a media file from a user at a first server in a first jurisdiction over a communications channel having a first bandwidth.

The media file 202 may comprise an audio, video, image, or program file, or any other type of media file now known or hereafter developed. In some embodiments, multiple media files 202 of the same type may be received at the first server and later uploaded, and in other embodiments, media files 202 of multiple types may be received at the first server 204 and later uploaded.

The first server 204 may comprise a typical server for fulfilling client requests and sending and receiving data, or a network of computer devices, such as a content delivery network ("CDN"). The first server 204 may also be provided by a service delivery platform ("SDP"), and thereby function as an interface between users 201 and the provider of the first server 204, allowing users 201 to identify media files 202 to upload and identify media hosts 208 to which the media files 202 should be transmitted. The first server 204 may also be similar to an edge server used in a CDN arrangement, where multiple edge servers are located in proximity to large numbers of users, such that users may communicate with an edge server rather than communicate over the internet backbone as a whole. In some embodiments, there may be multiple first servers 204 to which users may upload media files 202. In such embodiments, algorithms may determine which first server 204 is to receive the media files 202 based on factors such as available bandwidth, proximity to the user, and planned server down time, among other possible factors.

In some embodiments, the first server 204 may comprise or be in communication with storage devices, such as disk arrays, tape libraries, optical jukeboxes, or similar data storage equipment. The storage devices may be arranged in the form of a storage area network, network attached storage, or a similar network storage arrangement, in which the storage devices are in communication with the first server 204. The storage devices may be capable of storing the media files 202 that users 201 upload to the first server 204 before the media files 202 are sent to the second server 206. In some embodiments, the media files 202 may be temporarily stored on or in communication with the first server 204, and may be deleted after the media files 202 have been sent to the second server 206. In other embodiments, the media files 202 may be stored indefinitely on or in communication with the first server 204 for long term access by users.

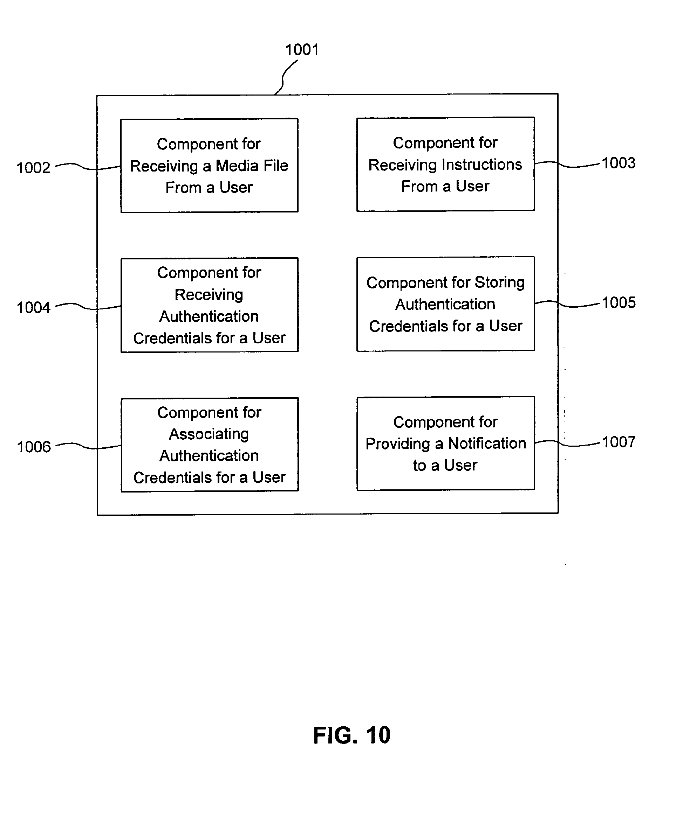

In some embodiments, as shown generally in Figure 10, the first server 1001 may comprise several components for running software, receiving, storing, and/or transmitting files, and communicating with other servers.

One such component may be a component 1002 for receiving media files from a user or from another server. Component 1002 may comprise one or more memories coupled to a processor and appropriate software for receiving and handling various types of media files. In some embodiments, component 1002 may include compression and/or decompression software for compressing media files to be sent to the second server, or decompressing media files sent from users to the first server.

Another type of component may be a component 1003 for receiving instructions from the user for providing the media file to a plurality of media hosts. Component 1003 may similarly comprise one or more memories coupled to a processor and appropriate software for receiving and processing the user's instructions.

Other types of components may include a component 1004 for receiving authentication and/or authorization (hereinafter "authentication") credentials for the user for the software interface and/or authentication credentials for the user for the plurality of media hosts. Component 1004 may comprise one or more memories coupled to a processor and appropriate software for receiving the user's authentication credentials for the software interface and/or the media hosts to which the user wants to transmit the files. In some embodiments, component 1004 may include security features for protecting the anonymity of users and/or the confidentiality of users' usernames and passwords. Such security features may include encryption protocols, for instance PGP ("pretty good privacy"), among other protocols and security features.

Additionally, other components may include a component 1005 for storing the authentication credentials of the user. Component 1005 may comprise one or more memories coupled to a processor, and appropriate software for storing and allowing retrieval of the user's authentication information.

A further type of component may include a component 1006 for associating the authentication credentials of a user with other authentication credentials for the user. For example, component 1006 may link the user's authentication credentials for a software interface or soft panel, such as a username and password, to the user's authentication credentials for a plurality of media hosts, such as a username and password. By such linking, as discussed further below, the user may provide authentication credentials to the software interface or soft panel, and let component 1006 logically associate them with the user's authentication credentials for the plurality of media hosts, rather than require the user to provide the authentication credentials for each media host individually. In some embodiments, the user may provide their authentication and/or authorization credentials before selecting media files and media hosts to which the files will be uploaded. In other embodiments, the user may provide no authentication and/or authorization credentials at all, or provide them simultaneously with selecting media files and media hosts to which the files will be uploaded. Component 1006 may comprise one or more memories coupled to a processor and software to perform the foregoing functions.

In addition, another component of server 1001 may be a component 1007 for providing a notification to the user when a media file is uploaded and/or posted in the media sites. Component 1007 may comprise one or more memories coupled to a processor, and software necessary for receiving an indication that a media file has been uploaded and/or posted, and sending a notification to the user that the media file has been uploaded and/or posted. The creation and transmission of such notifications is discussed in further detail below.

It is to be recognized that the first server 1001 and its constituent components described above may be implemented in other configurations as well. Such configurations may include different arrangements of memories, processors, and software, different coupling between the different components, additional components, and utilization of several servers rather than one single server.

With reference to Figure 2, the first jurisdiction may be a location in proximity to the user 201 such that, when compared to the location(s) of the media hosts 208, it is in the same vicinity as the user 201. For example, if the user 201 was located in France, and the media hosts 208 to which the user 201 wanted to upload the media files 202 were located in California, the first jurisdiction could be a location within France. The same form of relative proximity could also apply to two locations within the same country, for instance, in a situation where the user 201 was located in Florida and the media hosts 208 were located in California, or where the user 201 was located in New York and the media hosts 208 were located in Pennsylvania. In some embodiments, the first jurisdiction may be characterized by the types of communications channels between it and the second jurisdiction. For example, if the communications channel between Atlanta, Georgia, and Washington, DC, was a high bandwidth, high volume optical fiber connection, such as an internet backbone, Atlanta, Georgia, could be considered a first jurisdiction with respect to Washington, DC. A similar relationship may exist with respect to the communications channel between locations within the same state, or locations in different countries.

The communications channel having a first bandwidth 203 may refer to the internet connection by which the user 201 accesses the internet. As such, it may carry fewer user connections than a long distance, high volume communications channel such as an internet backbone, a "long haul" connection, or an "internet trunk." Communications channel 203 may also be characterized by the directionality of the media files 202 it carries. For example, from the perspective of the first server 204, communications channel 203 may be the communications channel that carries media files 202 to the first server 204, rather than the communications channel that carries media files 202 from the first server 204. Additionally, communications channel 203 may have a total bandwidth lower than the total bandwidth of high bandwidth, high volume communications channels used to connect the constituent networks of the internet, such as an internet backbone or the like. An example of the communication channel having a first bandwidth 203 may be a local or regional internet connection, which would in turn be connected to an internet backbone or the like. For instance, if the first server 204 was arranged as or similar to a CDN, one or more edge servers in proximity to the user 201 may function as the first server 204. The edge servers may be located in the user's 201 metropolitan area, or otherwise in the proximity of the user 201. As another example, communications channel 203 may be a general packet radio service ("GPRS"). In a GPRS arrangement, for instance, users of 2G or 3G cellular telephones may access the first server via the GPRS, and accordingly the GPRS may constitute communications channel 203.

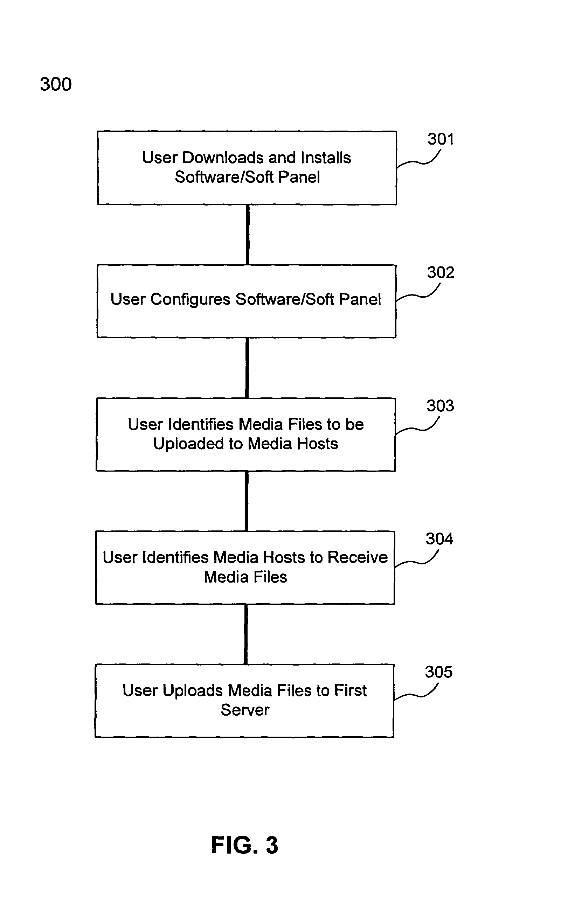

In some embodiments, the user 201 may be provided with software for identifying one or more media files 202 to upload and one or more media hosts 208 to which to upload the media files 202. For example, as shown in Figure 3, in a step 301 the user may download and install software that allows the user to select media files and media hosts to which the media files may be transmitted. In a step 302, the user may configure the software interface or soft panel, for example, by providing the user's authentication credentials, by selecting one or more groupings of media hosts, or by other means. In a step 303 the user may identify one or more media files to be uploaded to one or more media hosts. In a step 304, the user may identify one or more media hosts to which the media files may be uploaded. And in a step 305, the user may upload the one or more media files to the first server.

In certain embodiments, the software accessed by the user may be remotely executable, rather than executable on the user's computer, and thus the user may not be required to download and install the software on the user's computer. For example, the software could run on the first server, or on a server that operates in communication with the first server. Using a computer or mobile communications device, the user may be able to access the remotely executed software and thereby perform the steps described above.

In some embodiments, the software may be downloaded and installed, or utilized without downloading and installing, on a mobile device. For example, the user may access the software on a cellular telephone, a personal digital assistant, or any other type of portable communications device.

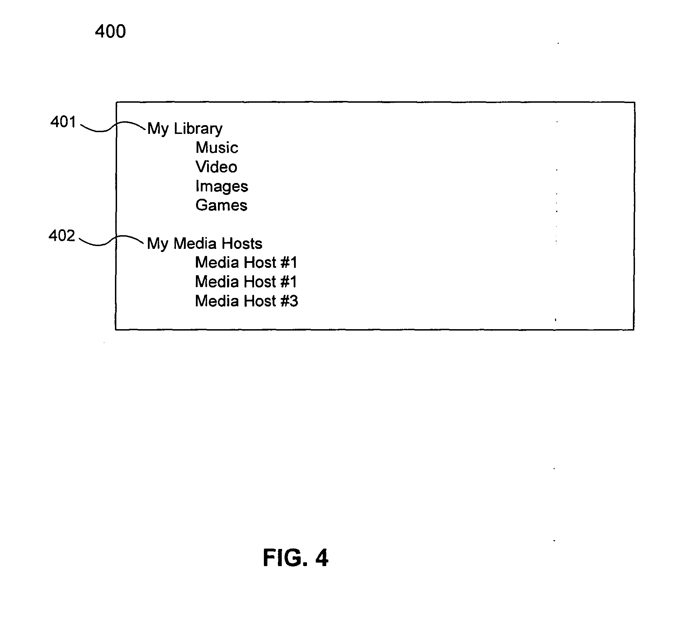

In some embodiments, the software accessed by the user may include a user interface or soft panel for identifying media files and media hosts. An exemplary software user interface or soft panel 400 is shown in Figure 4. The user interface or soft panel 400 may comprise a listing 401 of the different types of media files associated with the user. In some embodiments, listing 401 represents the media files stored on the user's computer or portable device. In other embodiments, listing 401 represents the media files stored remotely for the user, for example on the first server or a storage device in communication with the first server. The user interface or soft panel 400 may also comprise a listing 402 of media hosts to which media files may be uploaded. Listing 402 may be populated by the user, may be pre-populated by the designer of the software or soft panel 400, or may be a combination of both the user's choice and the designer's choice.

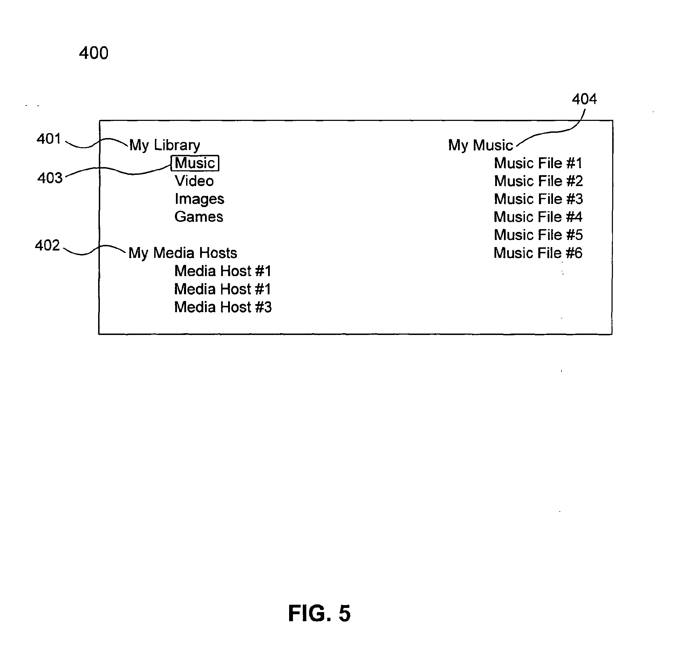

In some embodiments, as generally depicted in Figure 5, the user interface or soft panel 400 may allow the user to select a type 403 of media file from listing 401 of different types of media files associated with the user. Selecting a given type 403 of media file may then allow the user to see all of the media files of that type associated with the user in a listing 404. Other types 403 of media files may also be selected, and thereby allow the user to access similar listings of media files according to the type of media file.

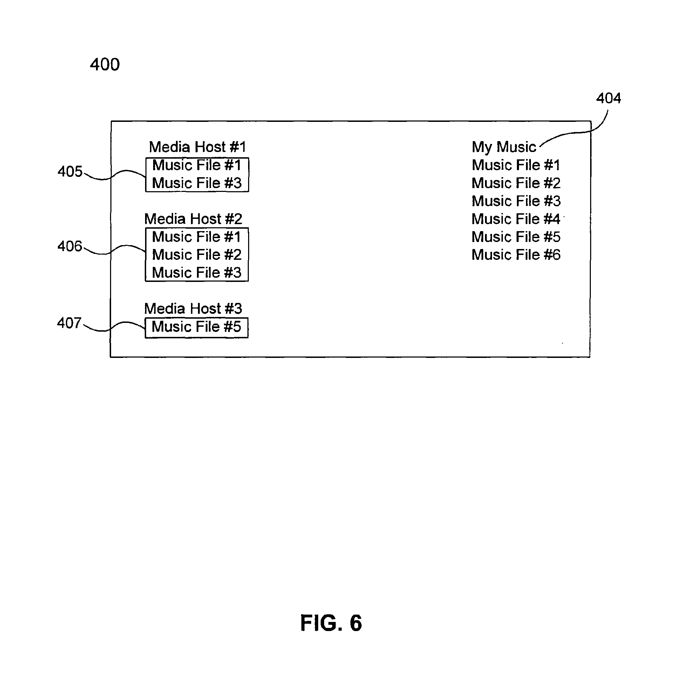

In further embodiments, as generally depicted in Figure 6, the user interface or soft panel 400 may present the user with one or more fields 405, 406, 407 representing media hosts in which the user may place identifiers of media files to be uploaded. The identifiers may be logically associated with the media files (on the user's computer or on the server), such that the user may move and assign the identifier, and thereby cause the media file associated with the identifier to be accessed, controlled, or manipulated. In some embodiments, the user interface or soft panel 400 may display the identifiers to the user as icons representing the media files.

In the example shown in Figure 6, fields 405, 406, 407 for three media hosts are displayed. The user may select identifiers of media files - for example music files - from the listing 404 and place them in the fields in accordance with the user's wishes. To place the identifiers in the fields, in some embodiments the user may drag and drop the identifiers, assert a button provided in the user interface or soft panel 400 that is associated with the identifiers, or any other similar technique.

In some embodiments, process 100 may then continue with a step 102, as generally depicted in Figure 1, in which instructions are received from the user for providing the one or more media files to one or more media hosts. For example, with reference to Figure 2, the user 201 may identify an assortment of audio, video, image, program, and other files, and provide instructions for uploading them to certain media hosts 208 that the user 201 selects. As discussed above, in some embodiments the user 201 may download and install software, or utilize software that is not downloaded to the user's 201 computer, thereby permitting the user 201 to identify media files 202 and media hosts 208 to which to provide the media files 202.

In some embodiments, process 100 may then continue with a step 103, as generally depicted in Figure 1, of transmitting the one or more media files to a second server in a second jurisdiction over a communications channel having a second bandwidth.

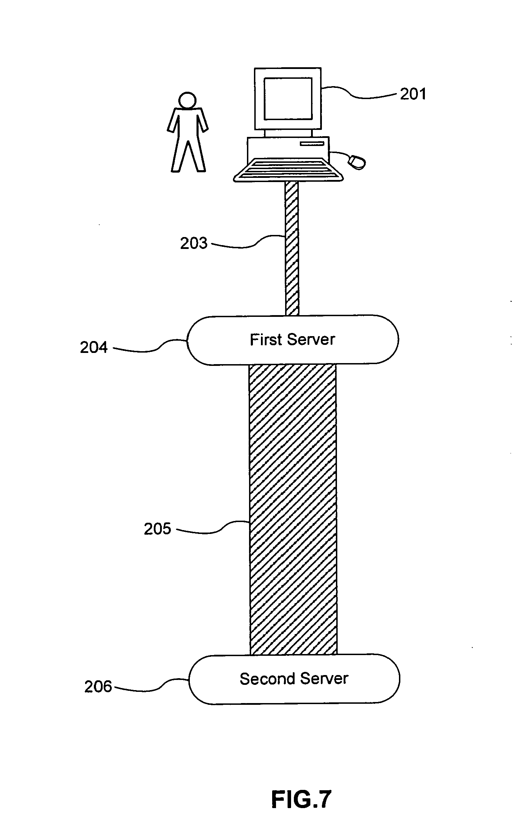

The second server in a second jurisdiction is typically not located in proximity to the user. As depicted in the exemplary illustration of Figure 7, for example, if the user 201 is located in Ireland and the media hosts to which the user wants to upload media files are located in the United States, second server 206 would typically be located in the United States rather than in Ireland. Similarly, if the user 201 is located in Massachusetts, and the media hosts to which the user wants to upload the media files are located in California, second server 206 would typically be located in the vicinity of California rather than the vicinity of Massachusetts. Similar to first server 204, second server 206 may comprise a typical server for fulfilling client requests and transmitting data, or a network of computer devices, such as a content delivery network ("CDN"). Second server 206 may also comprise or be in communication with temporary or long term storage devices. The storage devices may store the media files uploaded from the user either temporarily or indefinitely.

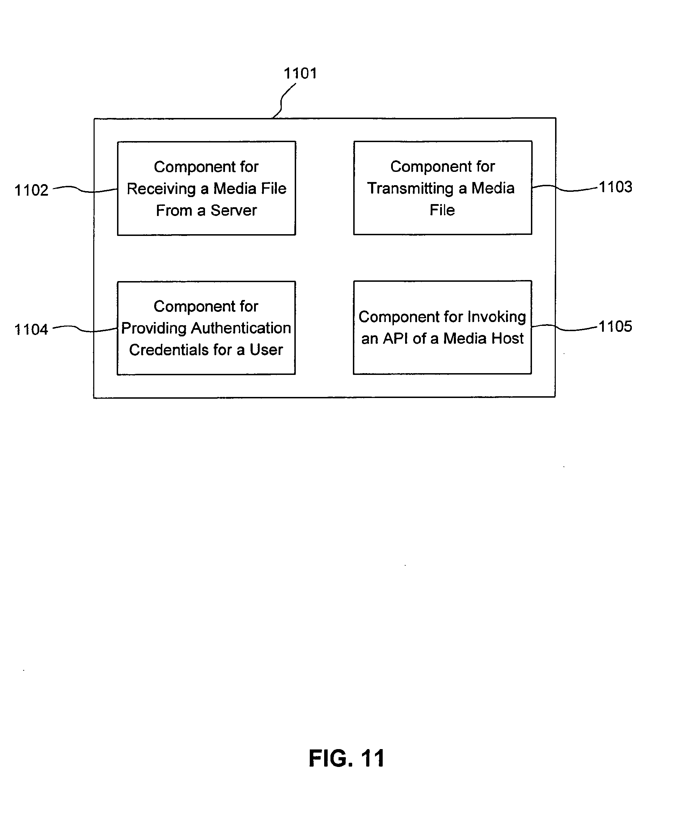

In some embodiments, as shown generally in Figure 11, the second server 1101 may comprise several components. Such components may include a component 1102 for receiving a media file from a server. In some embodiments, the component 1102 may comprise one or more memories coupled to a processor and software necessary for receiving and recognizing media files. In certain embodiments, the component 1102 is programmed and implemented to receive media files from the first server described above. Another such component may be a component 1103 for transmitting a media file to one or more media hosts. Component 1103 may comprise one or more memories coupled to a processor and software necessary for transmitting media files to media hosts. In certain embodiments, component 1103 comprises software for converting file format of media files, compression and/or decompression software for compressing media files, encryption software, and other similar forms of software. In some embodiments, component 1103 may be connected directly or indirectly to the internet for transmitting the media files. Another component that may be included in the second server 1101 is a component 1104 for providing a user's authentication credentials to media hosts. Component 1104 may comprise one or more memories coupled to a processor and software necessary for providing a user's authentication credentials to one or more media hosts, thereby allowing the user to be properly authenticated for the media hosts. In some embodiments, the authentication credentials may comprise a username and password, and component 1104 may comprise software for encrypting and/or decrypting the user's authentication credentials. A further component that may be included in the second server 1101 is a component 1105 for invoking an application programming interface ("API") of one or more media hosts. Component 1105 may comprise one or more memories coupled to a processor and software necessary for comprehending and invoking various APIs associated with different media hosts. The process of invoking a media hosts' APIs, as well as other forms of uploading media files to media hosts, is discussed in created detail below.

It is to be recognized that the second server 1101 and its constituent components described above may be implemented in other configurations as well. Such configurations may include different arrangements of memories, processors, and software, different coupling between the different components, as well as utilization of several servers rather than one single server.

With reference to Figure 7, communications channel having a second bandwidth 205 may be a high total bandwidth, long distance internet connection. In some embodiments, communications channel 205 may carry a larger number of connections than other connections, such as communications channel 203 or communications channels 207. In other embodiments, communications channel 205 may be characterized by its directionality. For example, communications channel 205 may be the communications channel that carries media files from the first server 204, rather than the communications channel used directly by the user 201 or the communications channel used to upload media files to media hosts. In other embodiments, communications channel 205 may also have a higher total bandwidth than communications channel 203. In certain embodiments, communications channel 205 may comprise one or more internet backbones or other high bandwidth, high volume connections. Examples of internet backbone providers include, inter alia, AT&T ®, Cogent Communications ®, Qwest Communications ®, and Global Crossing ®. In some embodiments, communications channel 205 may connect different countries to each other. For example, communications channel 205 may comprise the long distance optical fiber connections between Japan and Los Angeles, California, which run under the Pacific Ocean. In other embodiments, communications channel 205 may connect different areas within a country. For example, communications channel 205 may be a high bandwidth, high volume connection between New York City, New York, and Los Angeles, California, or between Boston, Massachusetts, and Philadelphia, Pennsylvania. In other embodiments, communications channel 205 channel may be wireless. For example, it may comprise satellite or other radio-frequency communications means.

In some embodiments, process 100 generally depicted in Figure 1 may then continue with a step 104, in which the one or more media files are transmitted from the second server to one or more media hosts over communications channels having third bandwidths, in accordance with the user's instructions.

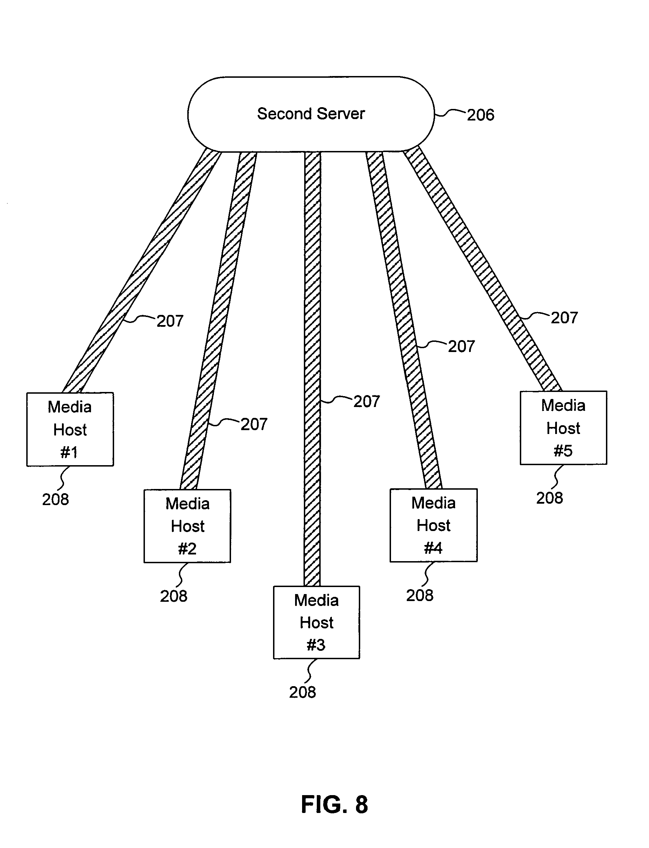

Figure 8 provides an exemplary depiction of second server 206, the communications channels having third bandwidths 207, and the one or more media hosts 208. The one or more media hosts 208 may include social-networking sites, such as, for example, Facebook ® (www.facebook.com), MySpace ® (www.myspace.com), Badoo ® (www.badoo.com), and Twitter ® (www.twitter.com), among numerous others. The one or more media hosts 208 may also be content posting and/or sharing sites, such as, for example, YouTube ® (www.youtube.com), Shutterfly ® (www.shutterfly.com), and Photobucket ® (www.photobucket.com), among various others. Numerous other types of media hosts 208 exist as well, largely reflecting the diverse preferences and habits of internet users. In some circumstances, the media hosts to which a user wishes to upload media files may be located in the same geographic region, and in other circumstances, the media hosts may be located in different cities, states, or countries. In some embodiments, there may be multiple second servers 206, and they may be located in the proximity of media hosts 208. For example, large concentrations of media hosts 208 may exist in the areas of San Francisco, California, or Dulles, Virginia, in which case one or more second servers 801 may exist in proximity to those media hosts 208.

Some sites, for example YouTube ®, allow users to post media files for widespread public consumption. A video posted on YouTube ® may be seen by anyone with internet access and the necessary Adobe Flash ® software. Other sites, for example, Facebook ®, allow users to post media files associated with their personal account, such that only a restricted set of people may access the media files. For some media hosts, media files may be accessed by users downloading the media file onto their computer or other communications device, and for other media hosts, media files may be accessed by streaming the media file to the user.

In addition to media hosting websites which users may access via a personal computer, media hosts 208 may include specialized applications that have been developed for mobile communications devices, such as cellular telephones and personal digital assistants, that allow users to post and view media content using such devices.

Typically, each media host 208 has its own unique access interface for allowing users to upload and post media files. Examples of such interfaces include APIs. Other means of uploading and posting media files to media hosts 208 include, for example, file transfer protocol ("FTP") software, among other means.

In some instances, media hosts 208 will employ API servers, which may be accessed to invoke the media hosts' APIs. For example, a media host 208 that allows users to post image files may have a particular API that enables other websites and/or servers to integrate their content with the media host 208. Using the media host's 208 API would allow users to upload their images to the media host's 208 website via another website without having to access the media host's 208 website directly. Facebook ®, for example, has made numerous of its APIs publically available, including, inter alia, APis directed to retrieving membership list data, retrieving information regarding friend lists, and retrieving photo-tagging information. Depending on the media host 208, the relevant APIs may or may not be publically accessible.

The communications channels having third bandwidths 207 may be the communications channels over which media files are sent from the second server 206 to the media hosts 208 for uploading. In some embodiments, communications channels 207 may carry fewer connections than the communications channel having a second bandwidth, or an internet backbone. In other embodiments, communications channels 207 may have a directionality different from other communications channels.
For example, communications channels 207 may be the channels over which media files are sent to media hosts 208 for uploading, rather than communications channels over which media files 202 are sent from the first server 204 to the second server 206, or from the user 201 to the first server 204. In further embodiments, communications channels 207 may have lesser total bandwidth than the communications channel over which media files 202 are sent from the first server to the second server 206.

In the step 104, as generally depicted in Figure 1, in which one or more media files are transmitted to one or more media hosts, the transmission may comprise invoking the API or other access interface of the media host on behalf of the user, utilizing FTP software, or employing other means of communicating with the media host. In some embodiments in which APIs are invoked, publically available APIs may be used, and in other embodiments, an agreement may be reached with the one or more media hosts to allow their APIs to be invoked.

As described above, the user 201 may be provided with software to download and install, or access via the internet, which allows the user to select one or more media files 202 to upload to one or more media hosts 208. If the media hosts 208 have user authentication requirements (such as, for example, a user name and password), the software provided to the user may manage the user's authentication credentials for the user 201. For example, if the user 201 had three different forms of authentication credentials for seven different media hosts 208, the software provided to the user may receive and store the three different forms of authentication credentials, and associate them with the appropriate media host(s) 208. Accordingly, the user 201 may access the software provided for uploading media files 202 (which may have its own authentication requirements), and identify media files 202 for uploading to media hosts 208 without having to provide the user's authentication credentials for each of the media hosts 208.

In some embodiments, the software provided to the user 201 may further notify the user once the one or more media files 202 identified by the user have been successfully uploaded to the one or more media hosts 208 in accordance with the user's instructions. In other embodiments, the software may also notify the user 201 if certain files have been rejected by the media hosts 208, or are otherwise incapable of being posted. Such notifications may be provided to the user 201 via various methods, including, for example, email, text message, or a message in the software environment provided to the user.

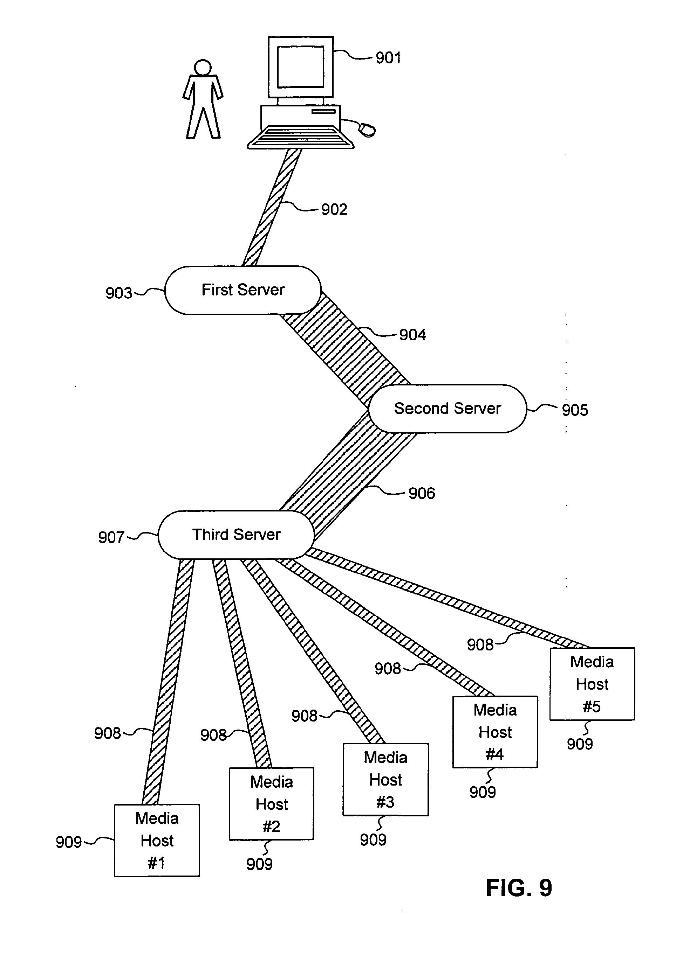

In other embodiments, as generally depicted in Figure 9, a user 901 may transfer one or more media files to one or more media hosts 909 in a more indirect manner. In certain situations, for instance, it may be faster and/or less expensive to transfer a media file from location A to location B by transferring the media file from location A to location C, and then from location C to location B. In such a situation, if the direct communications channels between locations A and B were relatively slow and/or costly in comparison to the communications channels between both locations A and C, and C and B, it may be more efficient to transfer the media file from location A to location B via location C, rather than to location B directly. For example, if a user 901 in Singapore wanted to transfer one or more media files to one or more media hosts 909 in the United Kingdom, the transfers might take a substantial amount of time, as well as result in significant costs and limits on available bandwidth. It may be faster and more efficient to transfer the file first to the United States and then to the United Kingdom, because the connections between Singapore and the United States, and between the United States and the United Kingdom, are both substantially more efficient than a more direct connection between Singapore and the United Kingdom. A similar situation could exist within a country, for example the United States, in which it would be more efficient to transfer a media file indirectly from one location to another, rather than directly, given the differences in cost and/or speed in the available communications channels. With reference to the exemplary illustration of Figure 9, therefore, a user 901 may identify one or more media files and one or more media hosts 909 to which to upload the media files. The user 901 may provide the one or more media files to first server 903 via first communications channel 902, along with instructions for providing the one or more media files to the one or more media hosts 909. The one or more media files may then be sent from first server 903 via communications channel 904 to second server 905, and then from second server 905 to third server 907 via communications channel 906. Then the one or more media files may be delivered to the one or more media hosts 909 via communications channels 908. Thus, the user is able to upload and post multiple media files to multiple media hosts by simply uploading the media files, and providing the user's instructions, to first server 903.

In some embodiments, server 903, server 905, and server 907 are located in different jurisdictions within the same country, and in other embodiments they are located in different countries. In further embodiments, two of servers 903, 905, and 907 may be located in one jurisdiction or country, and the third may be located in a different jurisdiction or country. In some embodiments, server 907 is located in the same jurisdiction as media hosts 909, and in other embodiments, server 907 and media hosts 909 are located in different jurisdictions.

Other embodiments will be apparent to those skilled in the art from consideration of the specification and practice of the invention disclosed herein. It is intended that the specification and examples be considered as exemplary only, with a true scope and spirit of the invention being indicated by the following claims.

## Claims

1. A computer-implemented method (100) of transmitting electronic media from a user to a plurality of media hosts, comprising:
receiving (101) a media file from the user at a first server in a first jurisdiction over a first communications channel having a first bandwidth;
receiving (102) instructions from the user for providing the media file to a plurality of media hosts;
transmitting (103) the media file to a second server in a second jurisdiction over a second communications channel having a second bandwidth; and
transmitting (104) the media file from the second server to the plurality of media hosts over third communications channels having third bandwidths in accordance with the instructions;
wherein the second bandwidth is greater than the first and third bandwidths.

2. A computer-implemented method of transmitting electronic media from a user to a plurality of media hosts, comprising:
receiving (101) a media file from the user at a first server in a first jurisdiction having a first proximity to the user over a first communications channel;
receiving (102) instructions from the user for providing the media file to a plurality of media hosts;
transmitting the media file to a second server in a second jurisdiction having a second proximity to the user over a second communications channel; and
transmitting the media file from the second server to the plurality of media hosts having third proximities to the user over third communications channels in accordance with the instructions;
wherein the first proximity to the user is substantially less than the second and third proximities to the user.

3. A computer-implemented method of transmitting electronic media from a user to a plurality of media hosts, comprising:
receiving (101) a media file from the user at a first server in a first jurisdiction over a first communications channel having a first bandwidth;
receiving (102) instructions from the user for providing the media file to a plurality of media hosts; and
transmitting the media file to a second server in a second jurisdiction over a second communications channel having a second bandwidth for retransmission of the media file from the second server to the plurality of media hosts over third communications channels having third bandwidths in accordance with the instructions;
wherein the second bandwidth is greater than the first and third bandwidths.

4. A computer-implemented method of transmitting electronic media from a user to a plurality of media hosts, comprising:
receiving (101) a media file at a first server in a first jurisdiction from a second server in a second jurisdiction over a first communications channel having a first bandwidth;
receiving (102) instructions from the user for providing the media file to a plurality of media hosts; and
transmitting the media file from the first server to the plurality of media hosts over second communications channels having second bandwidths in accordance with the instructions;
wherein the first bandwidth is greater than the second bandwidths.

5. The method of claim 4, wherein transmitting the media file from the first server to the plurality of media hosts comprises invoking at least one application programming interface associated with the plurality of media hosts.

6. The method of claim 4 or 5, wherein the first communications channel is an internet backbone.

7. The method of any one of claims 4 to 6, comprising providing a notification to the user when the media file has been transmitted to the plurality of media hosts.

8. A system for transmitting electronic media from a user (201) to a plurality of media hosts (208), comprising:
a first server (204) in a first jurisdiction, comprising:
a first component for receiving a media file (202) from the user over a first communications channel having a first bandwidth (203); and
a second component for receiving instructions from the user for providing the media file (202) to a plurality of media hosts; and
a second server (206) in a second jurisdiction, comprising:
a third component for receiving the media file (202) from the first server (204) over a second communications channel having a second bandwidth (205); and
a fourth component for transmitting the media file (202) to the plurality of media hosts (208) over third communications channels (207) having third bandwidths in accordance with the instructions;
wherein the second bandwidth (205) is greater than the first (203) and
third bandwidths.

9. A system for transmitting electronic media from a user (201) to a plurality of media hosts (208), comprising:
a first server (204) in a first jurisdiction, the first server (204) comprising:
a first component for receiving a media file (202) from the user over a first communications channel having a first bandwidth (203);
a second component for receiving instructions from the user for providing the media file (202) to a plurality of media hosts (208); and
a third component for transmitting the media file (202) to a second server (206) in a second jurisdiction over a second communications channel having a second bandwidth (205) for retransmission of the media file (202) from the second server (206) to the plurality of media hosts (208) over third communications channels (207) having third bandwidths in accordance with the instructions;
wherein the second bandwidth (205) is greater than the first (203) and third bandwidths.

10. A system for transmitting electronic media from a user (201) to a plurality of media hosts (208), comprising:
a first server (204) in a first jurisdiction, the first server (204) comprising:
a first component for receiving a media file (202) from a second server (206) in a second jurisdiction over a first communications channel having a first bandwidth (203);
a second component for receiving user-entered instructions for providing the media file (202) to a plurality of media hosts (208); and
a third component for transmitting the media file (202) to the plurality of media hosts (208) over second communications channels (207) having second bandwidths in accordance with the instructions;
wherein the first bandwidth (203) is greater than the second bandwidths.

11. A system for transmitting electronic media from a user (201) to a plurality of media hosts (208), comprising:
a first server (204) in a first jurisdiction having a first proximity to the user, the first server (204) comprising a first component for receiving a media file (202) from the user over a first communications channel, the first server (202) further comprising a second component for receiving instructions from the user for providing the media file (202) to a plurality of media hosts (208);
a second server (206) in a second jurisdiction having a second proximity to the user, the second server (206) comprising a third component for receiving the media file (202) over a second communications channel, the second server (206) further comprising a fourth component for transmitting the media file to the plurality of media hosts (208) having third proximities to the user over a third communications channel in accordance with the instructions;
wherein the first proximity to the user is substantially less than the second and third proximities to the user.

12. A computer-implemented method of transmitting electronic media from a user to a plurality of media hosts, comprising:
receiving (101) a media file from the user at a first server over a first communications channel;
receiving (102) instructions from the user for providing the media file to a plurality of media hosts;
transmitting (103) the media file to a second server over a second communications channel; and
transmitting (104) the media file from the second server to the plurality of media hosts over third communications channels in accordance with the instructions;
wherein, from the perspective of the first server, the first communications channel is a receiving communications channel and the second communications channel is a transmitting communications channel.

13. The method of claim 12, wherein the first server comprises a software interface for receiving a user selection of the media file and of the plurality of media hosts to which to transmit the media file.

14. The method of claim 13, comprising:
receiving authentication credentials for the user for the software interface and authentication credentials for the user for the plurality of media hosts;
storing the authentication credentials for the user for the plurality of media hosts; and
associating the authentication credentials for the user for the plurality of media hosts with a user account for the user for the software interface and the application programming interfaces of the plurality of media hosts.

15. A system for transmitting electronic media from a user (201) to a plurality of media hosts (208), comprising:
a first server (204), comprising:
a first component for receiving a media file (202) from the user over a first communications channel; and
a second component for receiving instructions from the user for providing the media file (202) to a plurality of media hosts (208); and
a second server (206), comprising:
a third component for receiving the media file (202) from the first server (204) over a second communications channel; and
a fourth component for transmitting the media file (202) to the plurality of media hosts (208) over third communications channels in accordance with the instructions;
wherein, from the perspective of the first server (204), the first communications channel is a receiving communications channel and the second communications channel is a transmitting communications channel.
